Europäisches Patentamt

European Patent Office

Office européen des brevets

(19)

(11) Numéro de publication : **0 058 117**
**B1**

(12) # FASCICULE DE BREVET EUROPÉEN

(45) Date de publication du fascicule du brevet :
24.04.85

(21) Numéro de dépôt : 82400197.8

(22) Date de dépôt : 04.02.82

(51) Int. Cl.⁴ : **B 64 C 27/00**, F 16 F 7/10,
F 16 F 15/04

(54) Dispositif simplifié de suspension antirésonnante pour hélicoptère.

(30) Priorité : 09.02.81 FR 8102472

(43) Date de publication de la demande :
18.08.82 Bulletin 82/33

(45) Mention de la délivrance du brevet :
24.04.85 Bulletin 85/17

(84) Etats contractants désignés :
DE GB IT

(56) Documents cités :
EP-A- 0 034 092
FR-A- 1 507 306
FR-A- 2 228 662
FR-A- 2 232 481
FR-A- 2 363 737
FR-A- 2 402 808

(73) Titulaire : **SOCIETE NATIONALE INDUSTRIELLE AEROSPATIALE Société dite:**
**37 Boulevard de Montmorency**
**F-75781 Paris Cedex 16 (FR)**

(72) Inventeur : **Mouille, René Louis Villa "La Pinède"**
**Le coton rouge Chemin du Moulin de Testas**
**F-13100 Aix en Provence (FR)**

(74) Mandataire : **Barnay, André François et al**
**Cabinet Barnay 80 rue Saint-Lazare**
**F-75009 Paris (FR)**

Jouve, 18, rue St-Denis, 75001 Paris, France

EP 0 058 117 B1

## Description

L'invention se rapporte à un dispositif de suspension antirésonnante pour hélicoptère comprenant un fuselage, un ensemble de propulsion, un rotor et une boîte de transmission située entre ledit ensemble et ledit rotor et alignée sur l'axe de ce dernier.

On a décrit dans le brevet européen n° 0 034 092 de la demanderesse (état de la technique tel que défini à l'article 54(3) CBE) un dispositif comportant une platine de suspension située sensiblement dans un plan perpendiculaire à l'axe du rotor et dont la partie centrale est solidaire du fond de la boîte de transmission, et des pièces de soutien reliées à la boîte de transmission et aux extrémités extérieures de bras disposés radialement autour de l'embase de la boîte de transmission, à laquelle ils sont reliés ainsi qu'au fuselage, les liaisons de chaque bras radial lui permettant des débattements par déformation dans le plan radial (c'est-à-dire passant par l'axe du rotor) qui le contient, ces débattements imprimant des déplacements importants à une masse battante montée à l'extrémité d'un support rigide dont l'autre extrémité est solidaire de l'extrémité du bras radial correspondant.

Dans ce dispositif connu, destiné à effectuer le filtrage des vibrations entre le rotor principal et le fuselage d'un hélicoptère, la platine de suspension et les bras radiaux sont confondus en une même pièce assurant outre la suspension, le transfert au fuselage de la réaction du couple d'entraînement du rotor. Cet agencement, par ailleurs très efficace, présente néanmoins l'inconvénient d'une construction relativement compliquée.

La présente invention a en conséquence pour objet un dispositif simplifié et est caractérisée par le fait que la platine de suspension et les bras radiaux sont séparés, cette platine étant constituée par une membrane en tôle mince déformable en flexion sous des efforts exercés perpendiculairement à son plan et/ou des moments de pivotement exercés autour de son centre par la boîte de transmission, mais rigide en traction/compression et en cisaillement sous des efforts et des moments exercés dans son plan tels que le couple de réaction d'entraînement du rotor, cette membrane s'intégrant à la structure supérieure du fuselage.

Afin de présenter une grande souplesse vis-à-vis des efforts verticaux et de basculement qu'elle reçoit, la membrane de suspension est de préférence dotée de nervures circulaires disposées concentriquement autour du fond de la boîte de transmission. Elle peut être réalisée également sous la forme d'une membrane multiple constituée par plusieurs tôles minces superposées avec espacement et assemblées en accordéon par leurs bordures circulaires centrées sur l'axe du rotor.

Chaque bras radial peut être relié à la boîte de transmission par une articulation d'axe perpendiculaire au plan radial contenant ledit bras, ou encore par un agencement de liaison souple lui conférant une certaine liberté de mouvement aussi bien angulairement que longitudinalement.

Dans une première forme d'exécution, chaque bras radial, réalisé en métal ou en matériau composite à base de fibres à haute résistance, est formé par une pièce unitaire offrant d'une part une partie flexible et d'autre part une partie rigide plus épaisse en des points de laquelle le bras est articulé à la pièce de soutien et au point fort du fuselage correspondant, et à laquelle est fixé un levier rigide constituant le support de la masse battante correspondante. De préférence, le levier précité est alors orienté vers l'axe du rotor parallèlement au bras radial auquel il est fixé ou sous un angle faible avec celui-ci.

Dans une autre forme d'exécution qui est préférée d'un point de vue pratique, chaque bras radial est formé par une lame radiale souple et par une partie d'un levier rigide dont l'autre partie constitue le support de la masse battante correspondante, l'extrémité extérieure de ladite lame étant solidarisée audit levier rigide dans la région où celui-ci est articulé à un point fort du fuselage. Il convient alors de choisir chaque lame souple et la masse battante telles que les efforts alternés appliqués au point fort du fuselage soient annulés par les efforts créés en ce même point par l'effet d'inertie de la masse battante. Dans ce cas, le levier rigide et la lame souple ont avantageusement des directions confondues, le levier étant formé de deux fers plats rectilignes réunis mutuellement et encadrant latéralement la lame souple. Chacune des masses battantes peut alors se présenter sous la forme d'un étrier renversé coiffant les deux fers plats qui forment les leviers rigides leur servant de support.

D'une manière générale, l'articulation de chaque bras radial au point fort correspondant du fuselage peut être réalisée sous la forme d'une articulation à double palier lamifié conique ou cylindrique et l'articulation de l'extrémité de chaque bras à la pièce de soutien correspondante sous la forme d'une articulation combinée à double palier lamifié conique ou cylindrique et à rotule. Toutes ces articulations peuvent également faire appel à des roulements à billes, à aiguilles ou à rouleaux.

Il convient d'autre part de doter un dispositif selon l'invention de butée limitant les déplacements verticaux des pièces de soutien de la boîte de transmission.

Afin d'améliorer le filtrage des vibrations non amorties par le dispositif décrit, on peut prévoir des résonateurs pendulaires complémentaires. A cet effet, chaque masse battante peut être équipée d'au moins un résonateur, constitué par une tige souple lestée d'une masselotte et fixée à ladite masse battante, accordé sur une fréquence à filtrer supérieure à la fréquence pour laquelle le dispositif est défini, choisie de préférence voisine du double du produit de la vitesse de rotation du rotor par son nombre de pales.

Un dispositif de suspension selon l'invention offre une grande simplicité d'application aux appareils équipés de pièces de soutien de la boîte de transmission principale (qu'il s'agisse de barres obliques articulées au sommet de la boîte de transmission ou de ferrures fixées à la périphérie de celle-ci) et une masse réduite par rapport aux dispositifs à inertie connus. Il est efficace aussi bien vis-à-vis des excitations de pompage dues aux efforts verticaux que vis-à-vis des excitations dues aux forces et aux moments engendrés dans le plan du rotor.

La description qui va suivre, en regard des dessins annexés à titre d'exemples non limitatifs, permettra de bien comprendre comment la présente invention peut être mise en pratique.

La figure 1 représente schématiquement, en élévation latérale, un dispositif de suspension selon l'invention.

La figure 2 représente une forme d'exécution pratique d'un dispositif selon l'invention, par une vue à plus grande échelle de la partie correspondant à la partie II de l'objet de la figure 1.

La figure 3 représente une coupe selon la ligne III-III de l'objet de la figure 2.

Les figures 4 et 5 représentent, à la manière de la figure 1, deux variantes d'exécution.

Les figures 6 et 7 représentent en plan des résonateurs complémentaires respectivement dans une première et dans une deuxième forme d'exécution.

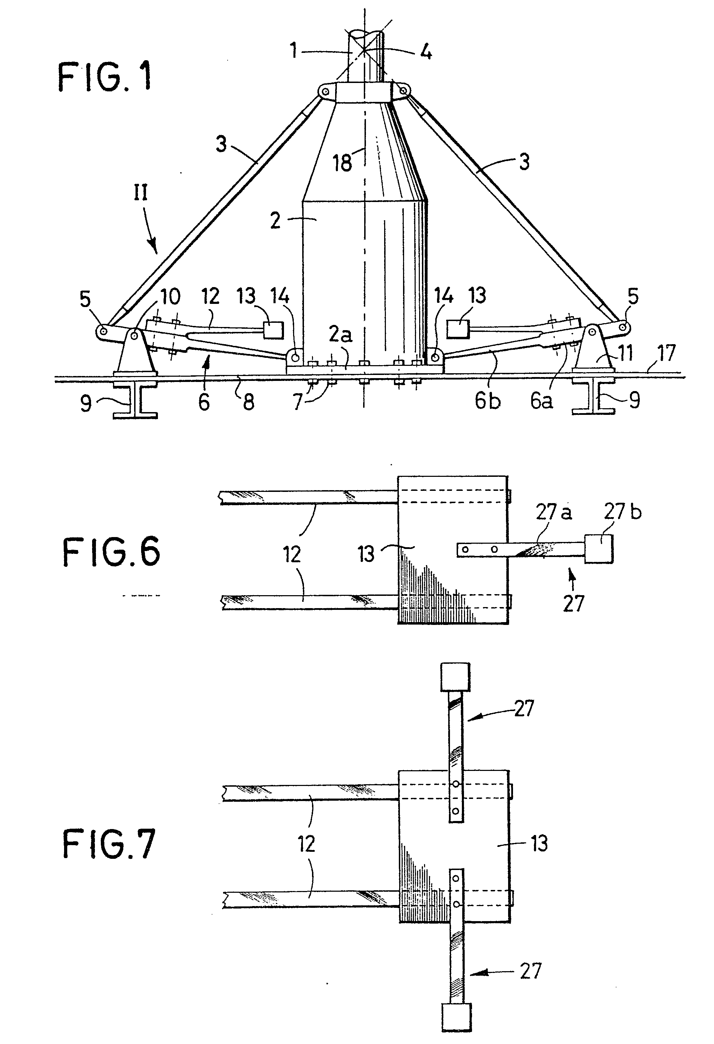

On voit sur la figure 1 la boîte de transmission principale 2 d'un hélicoptère interposée entre un ensemble de propulsion non représenté et l'arbre 1 du rotor, ce dernier n'étant pas davantage représenté. Les éléments 1 et 2 sont alignés sur l'axe de rotation 18 du rotor et constituent un ensemble rigide.

La boîte de transmission principale 2 est supportée par un jeu de barres obliques 3. Celles-ci sont sensiblement concourantes à leurs extrémités supérieures en un point de convergence 4 situé au sommet de la boîte de transmission 2, sur l'axe 18, et sont reliées à leurs extrémités inférieures, par l'intermédiaire d'une articulation 5, chacune à un bras flexible disposé radialement par rapport à l'axe 18 et s'appuyant par une articulation 10 sur un support 11 fixé à un cadre fort 9 du fuselage 17, tandis que son extrémité intérieure (c'est-à-dire voisine de l'axe 18) est articulée en 14 à une ferrure fixée à la boîte de transmission 2 au voisinage de son fond ou embase 2a. Les axes des articulations 5, 10 et 14 sont perpendiculaires au plan radial contenant l'axe 18, chaque barre oblique 3 et le bras 6 correspondant. L'articulation 10 est située entre les articulations 5 et 14, à proximité de l'articulation 5. Les articulations 5 et 10 sont prises dans une partie 6a épaisse et rigide du bras 6, dont seule la partie restante 6b, la plus proche de l'axe 18, est flexible, son épaisseur diminuant progressivement en direction de l'axe 18.

Les bras flexibles 6 peuvent être réalisés en un métal (acier ou titane) dont le rapport de résistance à la fatigue au module de flexion est élevé, ou encore en un matériau stratifié, par exemple en fibres de verre, enrobées de résine thermodurcissable.

Sur la partie rigide 6a de chaque bras 6 est rapporté un levier rigide 12 dirigé vers l'axe 18 et portant à son extrémité une masse battante 13, engendrant des forces d'inertie quant elle est mise en mouvement. Ces masses 13 sont destinées à produire aux points 10 des efforts identiques mais de sens contraire aux efforts alternés verticaux produits en ces mêmes points 10 par les barres obliques 3. Chaque levier 12 est situé dans le plan radial défini par le bras 6 et la barre 3 qui lui correspondent, parallèlement au bras 6 ou avec un léger décalage angulaire, de l'ordre de 10°, destiné à permettre un libre débattement de la masse battante 13.

De plus, le fond 2a de la boîte de transmission 2 est boulonné par une couronne de boulons 7 à la structure du fuselage constituée dans cette zone par une membrane 8 dont le plan est sensiblement perpendiculaire à l'axe 18 et qui est déformable sous l'action d'efforts s'exerçant suivant la direction dudit axe, ainsi que sous l'action d'efforts de basculement induisant des pivotements autour du point d'intersection de l'axe de rotation 18 avec le plan de la membrane 8, mais est relativement rigide en traction/compression vis-à-vis d'efforts contenus dans son plan et en cisaillement sous l'action du couple s'exerçant dans son plan également. Cette membrane est fixée sur des cadres forts 9 du fuselage par boulonnage ou tout autre moyen.

Dans le dispositif de suspension décrit, les différents efforts verticaux, c'est-à-dire suivant la direction de l'axe 18, exercés sur le rotor s'appliquent à la structure de l'hélicoptère par l'intermédiaire des barres obliques 3 qu'ils sollicitent en traction-compression.

Les efforts ou moments horizontaux, c'est-à-dire les efforts ou moments s'exerçant dans le plan du rotor, donnent naissance, au niveau du point de convergence 4 des barres obliques 3 et au niveau du fond 2a de la boîte de transmission 2, à des efforts horizontaux d'appui. Ceux-ci sont transmis au fuselage 17 d'une part par les barres 3 sollicitées en traction-compression et d'autre part par la membrane 8 sollicitée dans son plan par le fond de la boîte de transmission. Quant à la réaction du couple d'entraînement du rotor, elle est transmise au fuselage par le fond de la boîte de transmission 2 qui sollicite en cisaillement la membrane 8 sur laquelle elle est fixée.

Les supports structuraux 11 ne reçoivent donc que peu d'efforts verticaux dynamiques, la majeure partie de ceux-ci étant étouffée par les masses 13 montées sur les bras 12. En effet, la partie souple 6b des bras amplifie au niveau des masses battantes 13 les déplacements de l'extrémité des barres 3 et les mouvements alternés desdites masses créent des forces d'inertie qui produisent en 10 des réactions opposées aux efforts alternés apportés par les barres 3.

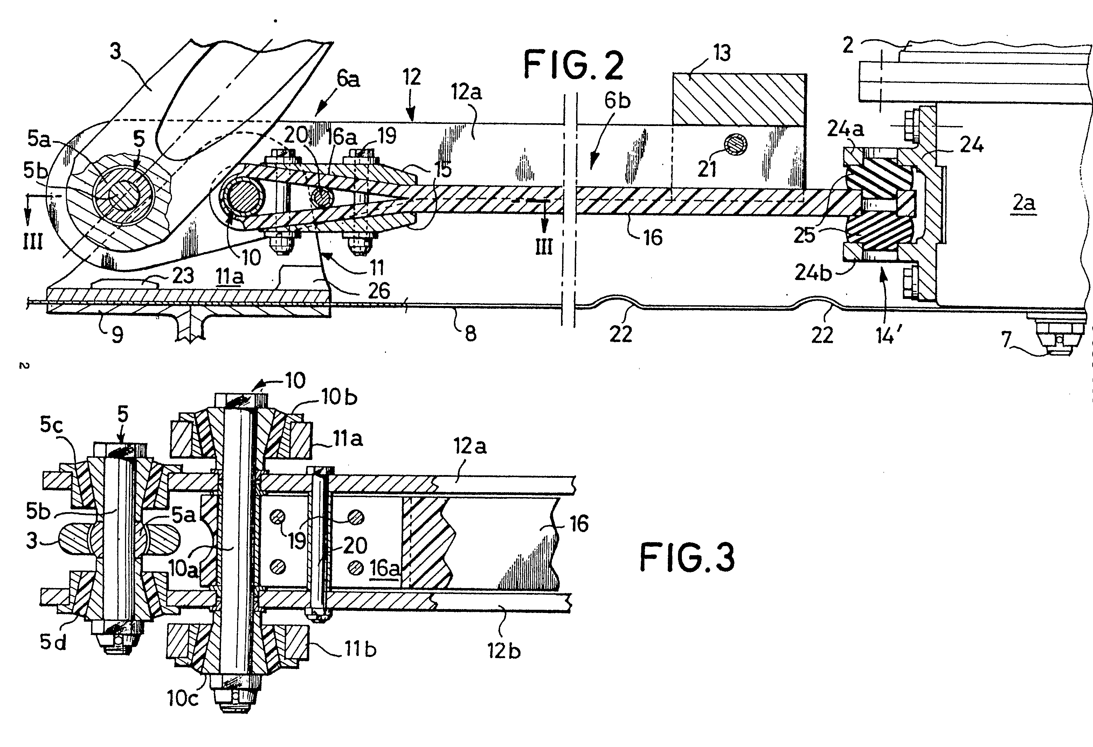

Les figures 2 et 3 illustrent un exemple de réalisation pratique d'un dispositif de suspension selon l'invention. Sur ces figures, on a repris les mêmes numéros de référence que sur la figure 1 pour les éléments homologues. Dans cette forme de réalisation, la partie rigide 6a des bras 6 est formée par un prolongement des leviers 12, tandis que la partie flexible 6b est constituée par une lame souple 16 solidarisée par son extrémité extérieure au levier 12 dans la région de l'articulation 10. Chaque barre oblique 3, réalisée par emboutissage, est donc articulée ici au levier rigide 12 correspondant, lequel est constitué par une paire de fers plats 12a, 12b. L'articulation 5 correspondante comprend une rotule 5a en prise avec l'extrémité de la barre 3, cette rotule étant montée sur une tige 5b traversant les fers plats 12a, 12b avec interposition de paliers lamifiés coniques 5c, 5d. L'articulation 10 du levier 12 correspondant comprend une tige 10a traversant les fers plats 12a, 12b et portée, par l'intermédiaire de paliers lamifiés coniques 10b, 10c, par les ailes 11a, 11b du support 11. Les paliers lamifiés 5c, d, 10b, c pourraient aussi être des paliers cylindriques. Les deux fers plats 12a, 12b sont entretoisés par les tiges 5b et 10a et par la masse battante 13 elle-même, constitué par une pièce en forme d'U renversé qui chevauche lesdits fers plats et est fixée par un boulon 21 traversant le tout.

Chaque lame souple 16 présente l'aspect d'un barreau de section rectangulaire constitué par une nappe de rubans de fils de verre enduits de résine thermodurcissable, repliée sur elle-même autour de la tige d'articulation 10a. La boucle terminale 16a que forme ainsi la lame 16 est renforcée par pincement entre deux cales 15 en forme de coin, maintenues par quatre boulons 19, et est rigidement liée aux deux fers plats 12a, 12b du levier 12 supportant la masse battante 13 au moyen de la tige 10a précitée et d'un boulon 20 passant également dans ladite boucle et entretoisant les deux fers plats 12a, 12b.

A son extrémité intérieure, chaque lame 16 est reliée élastiquement au moyen d'un agencement de liaison 14' à l'embase 2a de la boîte de transmission 2, par interposition entre deux plots 25 en élastomère introduits à force et maintenus en place entre deux ailes 24a, 24b qu'offre une ferrure 24 boulonnée à l'embase de la boîte de transmission 2, par emboîtement dans des trous circulaires prévus à l'extrémité de la lame 16 et dans chacune des ailes 24a, 24b.

Comme précédemment, l'embase 2a de la boîte de transmission est fixée sur la membrane 8 que forme la peau du fuselage par une couronne de boulons 7. Cette membrane 8 est réalisée en tôle mince d'acier ou de titane, avec une épaisseur de l'ordre du millimètre. Elle est fixée par boulonnage sur les cadres structuraux rigides 9 du fuselage. Elle comporte plusieurs nervures circulaires embouties 22, centrées sur l'axe 18 et destinées à réduire les surcontraintes pouvant s'exercer sur la membrane. Ainsi constituée, elle assure également une fonction pare-feu. Cette membrane autorise les mouvements alternés verticaux de la boîte de transmission 2 et les oscillations angulaires par rapport à la verticale dont celles-ci est susceptible d'être affectée. Elle supporte sans déformation importante, pour le transmettre à la structure du fuselage, le couple de réaction de l'entraînement du rotor de l'hélicoptère.

Chaque ferrure 11 d'accrochage sur le fuselage est munie de deux butées 23 et 26 qui évitent des déformations statiques trop importantes du bras radial 6. Ces butées sont disposées sous la portion rigide 6a du bras 6, constituée par la partie terminale du levier 12 support de la masse battante 13, de part et d'autre de l'articulation 10. La première butée 23 permet de limiter vers le bas le débattement de la barre 3 lorsque le rotor ne supporte pas le poids de l'appareil. La seconde butée 26 sert d'appui au levier 12 et limite les débattements de la barre 3 vers le haut, par exemple pour un facteur de charge limite 2,5 correspondant aux cas de ressource brutale ou de virage très serré.

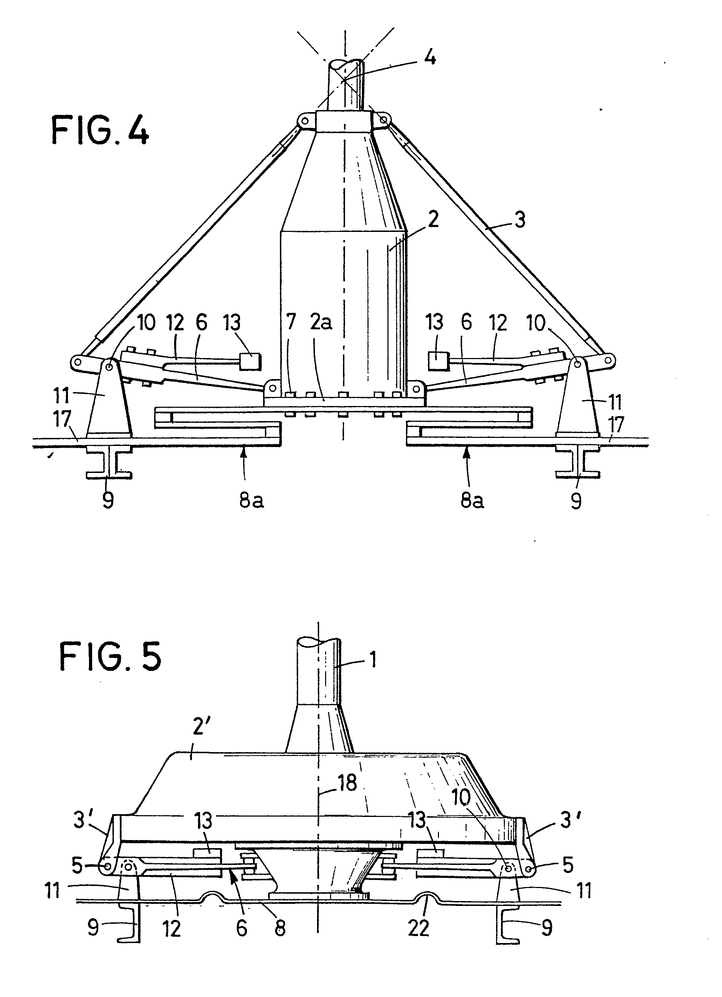

La membrane souple décrite précédemment peut être remplacée par une membrane multiple formée de plusieurs tôles 8a minces et souples, superposées et reliées en accordéon alternativement par leurs bords circulaires extérieurs et intérieurs, comme indiqué sur la figure 4.

La figure 5 illustre une variante relative à l'emploi d'une boîte de transmission 2' de type différent, offrant une conformation large et plate au lieu de s'étendre en hauteur comme la boîte de transmission 2. Ici, les pièces de soutien ne sont plus des barres obliques 3, mais de courtes ferrures 3' également articulées en 5 aux bras 6 à leurs extrémités inférieures, tandis que leurs extrémités supérieures sont liées rigidement à la périphérie de la boîte 2'. Le dispositif de suspension reste par ailleurs inchangé. Dans le présent exemple, les leviers 12 font un angle nul avec les bras radiaux 6, évidés à cet effet.

Les figures 6 et 7 illustrent deux dispositions complémentaires destinées à améliorer le filtrage et l'absorption des vibrations. Les agencements décrits plus haut n'assurent le filtrage que des excitations longitudinales, latérales et verticales centrées sur une fréquence $b\Omega$ (b étant le nombre de pales du rotor principal et $\Omega$ sa vitesse de rotation).

Afin d'améliorer le filtrage des excitations engendrées avec une fréquence $2b\Omega$, chaque masse battante 13 du présent dispositif est équipée d'au moins un résonateur 27 accordé sur la fréquence $2b\Omega$ et constitué d'une tige souple 27a fixée sur la masse battante 13 et munie à son extrémité d'une masselotte 27b.

Dans le cas de la figure 6, chaque masse battante 13 est dotée d'un résonateur 27 dont la tige 27a prolonge vers l'axe 18 du rotor le levier 12 (lequel doit être raccourci pour éloigner la masse 13 de la boîte de transmission 2 afin de ménager la place nécessaire audit résonateur).

Dans le cas de la figure 7, deux résonateurs 27 sont montés sur chaque masse battante 13, leurs tiges 27a étant disposées perpendiculairement au plan radial contenant le levier 12 et de part et d'autre de la masse battante 13.

Ces dispositions de perfectionnement ne sont pas pénalisantes en poids, car on utilise ici des masses battantes 13 dont le poids a été réduit de la valeur du poids du ou des résonateurs 27 additionnels.

## Revendications

1. Dispositif de suspension antirésonnante pour hélicoptère comprenant un fuselage, un ensemble de propulsion, un rotor et une boîte de transmission alignée sur l'axe de rotation du rotor, du type comportant une platine de suspension située sensiblement dans un plan perpendiculaire à l'axe du rotor et dont la partie centrale est solidaire du fond de la boîte de transmission (2), et des pièces de soutien (3) reliées à la boîte de transmission et aux extrémités extérieures de bras (6) disposés radialement autour de l'embase de la boîte de transmission, à laquelle ils sont reliés ainsi qu'au fuselage, les liaisons de chaque bras radial lui permettant des débattements par déformation dans le plan radial qui le contient, débattements qui impriment des déplacements importants à une masse montée à l'extrémité d'un support rigide dont l'autre extrémité est solidaire du bras radial correspondant, dispositif caractérisé par le fait que la platine et les bras radiaux (6) sont séparés, cette platine étant constituée par une membrane (8) en tôle mince déformable en flexion sous des efforts exercés perpendiculairement à son plan et/ou des moments de pivotement exercés autour de son centre par la boîte de transmission, mais rigide en traction/compression et en cisaillement sous des efforts et des moments exercés dans son plan tels que le couple de réaction d'entraînement du rotor, cette membrane étant intégrée à la structure supérieure du fuselage (17).

2. Dispositif selon la revendication 1, caractérisé par le fait que la membrane (8) possède des nervures circulaires (22) disposées concentriquement autour du fond (2a) de la boîte de transmission (2).

3. Dispositif selon la revendication 1, caractérisé par le fait que la membrane (8) est une membrane multiple constituée par plusieurs tôles minces superposées avec espacement et assemblées en accordéon par leurs bordures circulaires centrées sur l'axe du rotor.

4. Dispositif selon l'une quelconque des revendications 1 à 3, caractérisé par le fait que chaque bras radial (6) est relié à la boîte de transmission (2) par une articulation (14) d'axe perpendiculaire au plan radial contenant ledit bras.

5. Dispositif selon l'une quelconque des revendications 1 à 3, caractérisé par le fait que chaque bras radial (6) est relié à la boîte de transmission (2) par un agencement de liaison souple (14') lui conférant une certaine liberté de mouvement aussi bien angulairement que longitudinalement.

6. Dispositif selon l'une quelconque des revendications 1 à 5, caractérisé par le fait que chaque bras radial (6) est formé par une pièce unitaire offrant d'une part une partie flexible (6b) et d'autre part une partie rigide (6a) en des points de laquelle le bras (6) est articulé à la pièce de soutien (barre oblique 3) et au point fort (11) du fuselage correspondant, et à laquelle est fixé un levier rigide (12) constituant le support de la masse battante (13) correspondante.

7. Dispositif selon la revendication 6, caractérisé par le fait que le levier (12) est orienté vers l'axe (18) du rotor et fait un angle faible ou nul avec le bras radial (6) auquel il est fixé.

8. Dispositif selon l'une quelconque des revendications 1 à 5, caractérisé par le fait que chaque bras (6) est formé par une lame radiale souple (16) et par une partie (6a) d'un levier rigide dont l'autre partie (6b) constitue le support (12) de la masse battante (13) correspondante, l'extrémité extérieure de ladite lame (16) étant solidarisée audit levier rigide dans la région où celui-ci est articulé à un point fort (11) du fuselage.

9. Dispositif selon la revendication 8, caractérisé par le fait que chaque lame radiale souple (16) et la masse battante (13) sont choisies telles que les efforts alternés appliqués au point fort (11) sont annulés par les efforts créés en ce même point (11) par l'effet d'inertie de la masse battante (13).

10. Dispositif selon la revendication 8 ou 9, caractérisé par le fait que le levier rigide (12) et la lame souple (16) ont des directions confondues, le levier (12) étant formé de deux fers plats (12a, b) rectilignes réunis mutuellement et encadrant latéralement la lame souple (16).

11. Dispositif selon la revendication 10, caractérisé par le fait que chaque masse battante (13) se présente sous la forme d'un étrier renversé coiffant les deux fers plats (12a, b) qui forment ledit levier rigide.

12. Dispositif selon l'une quelconque des revendications 1 à 11, caractérisé par le fait que l'articulation (10) de chaque bras radial (6) au point fort (11) correspondant du fuselage est une articulation à double palier lamifié conique ou cylindrique (10a, b).

13. Dispositif selon l'une quelconque des revendications 1 à 12, caractérisé par le fait que l'articulation (5) de l'extrémité de chaque bras radial (6) à la pièce de soutien (barre oblique 3) correspondante est une articulation à double palier lamifié conique ou cylindrique (5c, d) et à rotule (5a).

14. Dispositif selon l'une quelconque des revendications 4 à 11, caractérisé par le fait que les articulations (5, 10) de chaque bras radial (6) sont des articulations à roulement à billes, à aiguilles ou à rouleaux.

15. Dispositif selon l'une quelconque des revendications 1 à 14, caractérisé par le fait qu'il comprend des butées (23, 26) limitant les déplacements verticaux des pièces de soutien (3, 3') de la boîte de transmission.

16. Dispositif selon l'une quelconque des revendications 1 à 15, caractérisé par le fait que chaque masse battante (13) est équipée d'au moins un résonateur secondaire (27), constitué par une tige souple (27a) lestée d'une masselotte (27b) et fixée à ladite masse battante, accordé sur une fréquence à filtrer supérieure à la fréquence pour laquelle le dispositif est défini et pouvant être choisie voisine du double du produit de la vitesse de rotation du rotor par son nombre de pales.

## Claims

1. Anti-resonance suspension device for helicopters having a fuselage, a propulsion assembly, a rotor and a transmission box in alignment with the axis of rotation of the rotor, the device being of the type comprising a suspension plate positioned generally in a plane perpendicular to the axis of the rotor and whose central portion is solid with the base of the transmission box (2), and support members (3) connected to the transmission box and to the outer ends of arms (6) positioned radially around the base of the transmission box, the radial arms being connected both to the transmission box and to the fuselage, the connections of each radial arm permitting the arm to undergo oscillatory movements by deformation in the radial plane which contains it, oscillatory movements which communicate displacements of consequence to a mass mounted at the end of a rigid support whose other end is joined fixedly with the corresponding radial arm, the device being characterised in that the plate and the radial arms (6) are separate, said plate comprising a thin sheet membrane (8) which is deformable by bending in response to forces exerted perpendicular to its plane and/or pivotal moments exerted about its centre by the transmission box, but which is rigid in traction/compression and in shear in response to forces and moments exerted in its plane such as the reaction couple from the entrainment by the rotor, said membrane being integral with the upper structure of the fuselage (17).

2. Device according to claim 1, characterised in that the membrane (8) is provided with circular ribs (22) positioned concentrically around the base (2a) of the transmission box (2).

3. Device according to claim 1, characterised in that the membrane (8) is a multiple membrane made up from a plurality of thin sheets superimposed in spaced relationship and assembled together in accordion style at their circular margins centred upon the axis of the rotor.

4. Device according to any one of claims 1 to 3, characterised in that each radial arm (6) is connected to the transmission box (2) by a joint (14) whose axis is perpendicular to the radial plane containing the said arm.

5. Device according to any one of claims 1 to 3, characterised in that each radial arm (6) is connected to the transmission box (2) by an intermediate flexible coupling (14') which permits a predetermined degree of movement both angularly and longitudinally.

6. Device according to any one of claims 1 to 5, characterised in that each radial arm (6) is formed by a unitary member having as one part a flexible portion (6b) and as the other part a rigid portion (6a), each arm (6) being connected by joints at points on the rigid portion to the support member (3) and to a corresponding strong-point (11) of the fuselage, and a rigid lever (12) constituting the support for the corresponding oscillatable mass (13) being secured to the rigid portion of each arm.

7. Device according to claim 6, characterised in that the lever (12) is directed towards the axis (18) of the rotor and makes a small or zero angle with the radial arm (6) to which it is fixed.

8. Device according to any one of claims 1 to 5, characterised in that each arm (6) is formed by a flexible radial blade (16) and by a part (6a) of a rigid lever whose other part (6b) constitutes the support (12) for the corresponding oscillatable mass (13), the outer end of the said blade (16) being joined with said rigid lever in the region where the latter is connected by a joint to a strong-point (11) of the fuselage.

9. Device according to claim 8, characterised in that each flexible radial blade (16) and the oscillatable mass (13) is chosen such that the alternating forces applied to the strong-point (11) are cancelled by the forces created at the same point (11) by the inertial effect of the oscillating mass (13).

10. Device according to claim 8 or 9, characterised in that the rigid lever (12) and the flexible blade (16) are directed in the same sense, the lever (12) being formed by two rectilinear iron webs (12a, b) which are mutually connected and laterally frame the flexible blade (16).

11. Device according to claim 10, characterised in that each oscillatable mass (13) has the form of an inverted stirrup arranged astride the two iron webs (12a, b) which form the said rigid lever.

12. Device according to any one of claims 1 to 11, characterised in that the joint (10) of each radial arm (6) to the corresponding strong-point (11) of the fuselage is a double bearing block joint (10a, b) lined with conical or cylindrical bearing elements.

13. Device according to any one of claims 1 to 12, characterised in that the joint (5) at the extremity of each radial arm (6 to the corresponding support member (3) is a double bearing block joint lined with conical or cylindrical bearing elements (5c, d), and a knuckle joint (5a).

14. Device according to any one of claims 4 to 11, characterised in that the joints (5, 10) of each radial arm (6) are rolling joints with balls, needles or rollers.

15. Device according to any one of claims 1 to 14, characterised in that it comprises abutments (23, 26) limiting the vertical displacement of the support members (3, 3') of the transmission box.

16. Device according to any one of claims 1 to 15, characterised in that each oscillatable mass (13) is provided with at least one secondary resonator (27) comprising a flexible stem (27a) weighted with a small mass (27b) and fixed to said oscillatable mass, the secondary resonator being tuned to a filter frequency which is higher than the frequency for which the device is designed and optionally being chosen to be approximately twice the product of the speed of rotation of the rotor and its number of blades.

**Patentansprüche**

1. Schwingungsgedämpfte Aufhängungsvorrichtung für Hubschrauber mit einem Rumpf, einem Antriebsaggregat, einem Rotor und einem auf die Drehachse des Rotors ausgerichteten Getriebe, bestehend aus einer im wesentlichen in einer rechtwinklig zur Rotorachse verlaufenden Ebene liegenden Aufhängungsplatte, deren Mittelteil mit dem Boden des Getriebes (2) fest verbunden ist, und aus mit dem Getriebe (2) verbundenen Stützteilen (13), welche an den äußeren Enden von radial um die Bodenplatte des Getriebegehäuses angeordneten Armen (6) sitzen, die ihrerseits damit ebenso wie mit dem Rumpf verbunden sind, wobei die Verbindungen eines jeden Radialarmes ihm Ausschläge durch Verformung in seiner eigenen Radialebene erlauben, welche einer am Ende einer starren Stütze, deren anderes Ende fest mit dem entsprechenden Radialarm verbunden ist, montierten Masse beträchtliche Verschiebungen aufdrücken, dadurch gekennzeichnet, daß die Aufhängungsplatte und die Radialarme (6) getrennt sind, daß diese Platte durch eine Membrane (8) aus dünnem Blech gebildet wird, welche unter den rechtwinklig zu ihrer Ebene einwirkenden Kräften und/oder unter den um ihren Mittelpunkt durch das Getriebegehäuse ausgeübten Schwenkmomenten elastisch durchbiegbar ist, jedoch auf Zug/Druck und Abscherung unter den in ihrer Ebene einwirkenden Kräften und Momenten wie das Antriebsreaktionsmoment des Rotors starr ist, und daß diese Membrane in die obere Struktur des Rumpfes integriert ist.

2. Vorrichtung nach Anspruch 1, dadurch gekennzeichnet, daß die Membrane (8) kreisrunde, konzentrisch um den Boden (2a) des Getriebegehäuses (2) verlaufende Rippen (22) aufweist.

3. Vorrichtung nach Anspruch 1, dadurch gekennzeichnet, daß die Membrane (8) eine Mehrfachmembrane ist, die durch mehrere mit Abstand übereinander angeordnete und ziehharmonikaartig durch ihre auf die Rotorachse zentrierten kreisrunden Kanten verbundene dünne Bleche gebildet wird.

4. Vorrichtung nach einem der Ansprüche 1 bis 3, dadurch gekennzeichnet, daß jeder Radialarm (6) mit dem Getriebegehäuse (2) durch ein Gelenk (14) mit zur eigenen Radialebene des Armes rechtwinklig verlaufender Achse verbunden ist.

5. Vorrichtung nach einem der Ansprüche 1 bis 3, dadurch gekennzeichnet, daß jeder Radialarm (6) mit dem Getriebegehäuse (2) durch eine nachgiebige Anordnung (14') verbunden ist, die ihm sowohl winkelmäßig wie auch in Längsrichtung eine gewisse Freiheit verleiht.

6. Vorrichtung nach einem der Ansprüche 1 bis 5, dadurch gekennzeichnet, daß jeder Arm (6) durch ein einheitliches Teil gebildet wird, welches einerseits ein flexibles Teil (6b) und andererseits ein starres Teil (6a) an den Punkten aufweist, an denen der Arm an der Stütze (der Schrägstrebe 3) und am entsprechenden verstärkten Punkt (11) des Rumpfes angelenkt ist, und daß am letztgenannten starren Teil (6a) ein starrer Hebel (12) befestigt ist, welcher den Träger für die entsprechende Schlagmasse (13) bildet.

7. Vorrichtung nach Anspruch 6, dadurch gekennzeichnet, daß der Hebel (12) zur Achse (18) des Rotors hinweist und mit dem Radialarm (6), an dem er befestigt ist, einen spitzen Winkel oder einen Winkel von 0° bildet.

8. Vorrichtung nach einem der Ansprüche 1 bis 5, dadurch gekennzeichnet, daß jeder Arm (6) durch ein biegsames Radialblatt (16) und durch ein Teil (6a) eines starren Hebels gebildet wird, dessen anderes Teil (6b) den Träger (12) der entsprechenden Schlagmasse (13) bildet, wobei das äußere Ende des Blattes (16) mit dem starren Hebel in dem Bereich fest verbunden ist, in welchem letzterer an einem kräftigen Punkt (11) des Rumpfes angelenkt ist.

9. Vorrichtung nach Anspruch 8, dadurch gekennzeichnet, daß jedes biegsame Radialblatt (16) und die Schlagmasse (13) derart ausgewählt sind, daß die auf den kräftigen Punkt (11) ausgeübten Wechselkräfte durch die Kräfte annulliert werden, welche am gleichen Punkt durch den Trägheitseffekt der Schlagmasse hervorgerufen werden.

10. Vorrichtung nach Anspruch 8 oder 9, dadurch gekennzeichnet, daß der starre Hebel (12) und das biegsame Blatt (16) richtungsmäßig zusammenlaufen und daß der Hebel (12) aus zwei geradlinigen Flacheisen (12a, b) besteht, welche miteinander verbunden sind und das biegsame Blatt (16) seitlich einrahmen.

11. Vorrichtung nach Anspruch 10, dadurch gekennzeichnet, daß jede Schlagmasse (13) die Form eines über die den starren Hebel bildenden beiden Flacheisen (12a, b) von oben her hinweggreifenden Bügels hat.

12. Vorrichtung nach einem der Ansprüche 1 bis 11, dadurch gekennzeichnet, daß die Gelenkverbindung (10) eines jeden Radialarmes (6) mit dem entsprechenden kräftigen Punkt (11) des Rumpfes aus einem konischen oder zylindrischen Schichtstoff-Doppellager (10a, b) besteht.

13. Vorrichtung nach einem der Ansprüche 1 bis 12, dadurch gekennzeichnet, daß die Gelenkverbindung (5) des Endes eines jeden Radialarmes (6) mit der entsprechenden Stütze (Schrägstrebe 3) aus einem konischen oder zylindrischen Schichtstoff-Doppellager (5c, d) und einem Kugelgelenk (5a) besteht.

14. Vorrichtung nach einem der Ansprüche 4 bis 11, dadurch gekennzeichnet, daß die Gelenkverbindungen (5, 10) eines jeden Radialarmes (6) als Kugel-, Nadel- oder Rollenlager ausgebildet sind.

15. Vorrichtung nach einem der Ansprüche 1 bis 14, dadurch gekennzeichnet, daß sie Anschläge (23, 26) zur Begrenzung der Vertikalbewegungen der Stützen (3, 3') des Getriebegehäuses aufweist.

16. Vorrichtung nach einem der Ansprüche 1 bis 15, dadurch gekennzeichnet, daß jede Schlagmasse (13) mit wenigstens einem Nebenresonator (27) bestückt ist, der durch einen an der Schlagmasse befestigten und am freien Ende mit einem Reguliergewicht (27b) belasteten biegsamen Stab (27a) gebildet wird und auf eine zu filternde Frequenz abgestimmt ist, welche höher ist als die Frequenz, für die die Vorrichtung ausgelegt ist, und nahe dem doppelten Produkt aus der Rotordrehzahl und der Anzahl der Rotorflügel gewählt werden kann.

FIG. 1

FIG.6

FIG.7

**FIG.2**

**FIG.3**

FIG. 4

FIG. 5